(19) Europäisches Patentamt
European Patent Office
Office européen des brevets

(11) **EP 3 469 373 B1**

(12) **EUROPEAN PATENT SPECIFICATION**

(45) Date of publication and mention
of the grant of the patent:
**13.10.2021 Bulletin 2021/41**

(51) Int Cl.:
***G01N 35/00*** *(2006.01)*          ***D06F 37/42*** *(2006.01)*
***D06F 39/02*** *(2006.01)*

(21) Application number: **17723397.0**

(22) Date of filing: **15.05.2017**

(86) International application number:
**PCT/EP2017/061600**

(87) International publication number:
**WO 2017/211539 (14.12.2017 Gazette 2017/50)**

(54) **A MACHINE COMPRISING A DEVICE FOR CONTROLLING THE MACHINE OR PROCESS BY DETECTING A QUALITY OF A FLUID FORMULATION TO BE INTRODUCED IN THE MACHINE AND CORRESPONDING METHODS**

MASCHINE MIT EINER VORRICHTUNG ZUR STEUERUNG DER MASCHINE ODER EINES VERFAHRENS DURCH ERFASSEN EINER EIGENSCHAFT EINER IN DIE MASCHINE ZUZUFÜHRENDEN FLÜSSIGEN FORMULIERUNG UND ENTSPRECHENDE VERFAHREN

MACHINE COMPRENANT UN DISPOSITIF DE COMMANDE DE LA MACHINE OU DU PROCÉDÉ PAR DÉTECTER UNE PROPRIÉTÉ D'UNE FORMULATION D'UN FLUIDE ET PROCÉDÉS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2016 EP 16173900**

(43) Date of publication of application:
**17.04.2019 Bulletin 2019/16**

(73) Proprietors:
• **Unilever Global IP Limited**
 **Wirral, CH62 AZD (GB)**
 Designated Contracting States:
 **CY DE GB IE IT MT**
• **Unilever IP Holdings B.V.**
 **3013 AL Rotterdam (NL)**
 Designated Contracting States:
 **AL AT BE BG CH CZ DK EE ES FI FR GR HR HU IS LI LT LU LV MC MK NL NO PL PT RO RS SE SI SK SM TR**

(72) Inventors:
• **CHATTERJEE, Debosree**
 **Whitefield**
 **Bangalore 560 066 (IN)**
• **GEORGE, Manu**
 **Whitefield**
 **Bangalore 560 066 (IN)**
• **NETHAJI, Alagirisamy**
 **Whitefield**
 **Bangalore 560 066 (IN)**
• **SHRESTH, Rudra, Saurabh**
 **Whitefield**
 **Bangalore 560 066 (IN)**

(74) Representative: **Reijns, Tiemen Geert Pieter et al**
 **Unilever N.V.**
 **Unilever Patent Group**
 **Bronland 14**
 **6708 WH Wageningen (NL)**

(56) References cited:
**EP-A1- 1 063 339          WO-A1-2005/048806**
**WO-A1-2011/120596          WO-A1-2015/173610**
**CN-U- 203 842 445          DE-A1- 10 039 408**
**DE-B3-102005 046 858          US-A- 5 536 663**
**US-A1- 2015 300 862**

**Description**

**Field of the invention**

The present invention relates to a device for controlling a machine by controlling the quality of a fluid formulation that is to be introduced in the machine or process. More particularly, the invention relates to a device for detecting a marker present in a fluid formulation whereby the fluid formulation is to be introduced in a machine or a process in said machine.

The invention further relates to a method to control the quality of a fluid formulation that is to be introduced in a machine or a process in said machine. More particularly, the invention relates to a method to detect a marker present in a fluid formulation whereby the fluid formulation is to be introduced in a machine or a process in said machine.

Furthermore, the invention relates to a method to control a machine or a process in said machine, by controlling the quality of a fluid formulation that is to be introduced in the machine or said process.

**Background of the invention**

Processes such as chemical processes or cleaning processes requiring chemical ingredients or formulations as their input raw material, depend significantly on the purity and compositional correctness of the chemical ingredients or formulations. In industrial processes where it is common practice to strictly control all process parameters, the quality and stability of the chemical ingredients or formulations of the input raw material are controlled. When such processes are brought into the consumer domain in the form of devices and machines, such controls are not common. It is however important to ensure that the consumer uses only the chemical formulations that the manufacturer intended for such process. In case the consumer uses an inappropriate formulation in processes that are formulation dependent, the use of an inappropriate formulation could not only lead to the failure of the process but also to damage of the device/machine (either reversible or irreversible damage). In some case the use of an inappropriate formulation or of an inappropriate chemical ingredient can lead to unsafe situations for the consumer.

Therefore, there is a need to provide a device to control the quality or composition of a formulation to initiate or stop a machine or process. One way to control the formulation is to incorporate a sensor in the machine or process to detect whether the appropriate formulation is used in the machine or not. Such sensor may be provided in the reservoir of the fluid formulation. However, such configuration may cause problems because it is possible that a specific formulation selective for the process is used and later a nonspecific formulation is added into the same reservoir and that due to miscibifity issues the detection by the sensor will be erroneous. Furthermore, there is a risk that during non-use of the machine the formulation may dry up on the surface of the sensor which may result in inappropriate functioning of the sensor.

US2007-0295665A1 (General Electric, 2007), discloses an appliance including a sensor disposed in-line to an incoming flow of water and configured to sense a degree of hardness in the incoming flow of water. The sensor is connected to a controller that actuates an additive dosing system located elsewhere in the appliance. In order to address the above mentioned problem, such devices will not provide adequate residence time to enable sensing of the fluid and will require additional flow controllers or valves.

US2013-0048024A1 (Tampereen Teollisuussähkö OY, 2013), discloses an equipment and method for a system implementing a multistep washing process, with a chemical container for each chemical and means for conveying one chemical at a time from the container through a feed channel to a washing object and from the washing object through a return channel back to the container. First and second sensors monitor a first parameter set in the feed channel and a second parameter set in the return channel, respectively. In a particular embodiment the sensors are located in a U-shaped bypass pipe. Such embodiment will cause problems in case different fluid formulations are consecutively used, for example in case a tube is first filled with a high density fluid and then a freshly added fluid of lower density is added. In such case the freshly added fluid of lower density will flow through the main tube and will not fill the U-shaped bypass tube. The reason for such behavior is because the pre-filled fluid inside the U-shaped bypass tube is heavier than the freshly added fluid and may not be readily replace with a fluid of lower density. This would lead to situations where the sensor may continue to detect the first fluid. Consequently, placing the sensor in a tube bypassing the main tube can lead to errors in measurement for example depending on the flow and density of the fluid or fluids.

DE102005046858 B3 (Miele & Cie KG, 2007) discloses controlling a rinsing machine or a process in said machine based on the detection of flow speed of a fluid or a liquid utilizing an ultrasonic sensor. Specifically, it discloses a device for measuring an amount of a rinsing additive to be metered into a rinsing, washing or disinfecting process in a rinsing machine. The device includes a measuring segment for conveying the rinsing additive. The measuring segment has a defined length and a defined diameter, and includes a first cylindrical widening at an upstream end thereof. An ultrasound sensor is associated with the measuring segment for performing a measurement of at least one of a running time, an amplitude and a phase as a function of a flow rate of the rinsing additive so as to enable a determination of at least one of a type and an amount of the additive flowing through the measuring segment. A cap including a cylindrical indentation is received in the cylindrical widening so as to form an annular chamber.

## Summary of the invention

It is an object of the present invention to provide a device for controlling a machine or process by controlling the quality of a fluid formulation that is to be introduced in the machine or process avoiding at least some of the drawbacks of the prior art.

It is another object of the present invention to provide a device for detecting a marker in a fluid formulation to be introduced in a machine.

It is a further object of the invention to provide a machine comprising a device comprising a sensor placed between a reservoir holding a fluid formulation and a dosing unit for dosing the fluid formulation to a machine whereby controller associated with the device is able to initiate or stop the operation of the machine or process.

It is another object of the present invention to provide a device for detecting a marker in a fluid formulation to be introduced in a machine whereby the sensor functions independently from the density of the fluid formulation, in particular whereby the sensor functions well even if consecutive fluid formulations having different compositions or properties such as different densities are used, and if consecutive fluid formulations having different densities that are not readily miscible are used.

It is a further object of the present invention to provide a method to control the quality of a fluid formulation that is to be introduced in a machine and more particularly to provide a method to detect a marker present in the fluid formulation.

According to a first aspect the present invention pertains to a machine(10) comprising a device for controlling the machine or a process in said machine(10) by by detecting the presence or absence of at least one marker in a fluid formulation to be introduced in said machine, said device (12) comprising:

-   a tube(1), said tube(1) comprising an inlet and an outlet, said inlet being in fluid communication with a reservoir(5) of said machine (10) for holding said fluid formulation, said outlet being in fluid communication with a dosing unit(6) for introducing said fluid formulation in said machine(10), said tube(1) comprising at least one first arm(2), at least one second arm(3) and at least one connection part(11), said connection part connecting said at least one first arm(2) and said at least one second arm(3), whereby said at least one first arm is at least partially upwardly directed away from said connection part(11) and said at least one second arm(3) is at least partially upwardly directed away from said connection part(1 1);
    at least one sensor(4) for for detecting the presence of said marker in said fluid formulation by detecting a signal caused by said marker in said fluid formulation, said at least one sensor(4) being positioned in said connection part(11) connecting said first(2) and said second arm(3);
-   a controller(7) coupled to said at least one sensor(4) for comparing said signal caused by said fluid formulation with a predetermined range of values; whereby if said signal caused by said fluid formulation is not within said predetermined range of values, said controller(7) gives a signal to said machine(10) to stop said machine(10) or process in said machine(10).

Preferably the controller gives a signal to central processing unit of the machine and the central processor gives a signal to the machine to stop the machine or process.

If said signal caused by said fluid formulation is within said predetermined range of values, said controller gives a signal to said machine to start or continue said machine or process. Preferably the controller gives a signal to central processing unit of the machine and the central processor gives a signal to the machine to start or continue the machine.

With "controlling a machine" is meant controlling when a machine or process (or a component or unit of the machine or a sub-process of the process) should be activated and when a machine or process (or a component or unit of the machine or a sub-process of the process) should be stopped or deactivated.

With "controlling the quality of a fluid formulation" is for example meant, controlling the composition of the fluid formulation, controlling one or more properties of the fluid formulation as for example conductivity, temperature or viscosity; controlling the presence or absence of a particular ingredient as for example detecting the presence or absence of a marker in the fluid formulation.

The device according to the present invention comprises a device for detecting a marker present in the fluid formulation to be introduced in the machine. The device comprises a sensor to detect a signal caused by the marker present in the fluid formulation.

Tube:

As mentioned above the tube comprises an inlet and an outlet. The fluid formulation flows through the tube from the inlet to the outlet. The inlet is preferably connected with a reservoir for holding the fluid formulation; the outlet is preferably connected with the machine or with a component or unit of the machine, for example with a dosing unit for introducing the fluid formulation in the machine or in a component or unit of the machine.

The inlet is preferably in fluid communication with the reservoir for holding the fluid formulation and the outlet is in fluid communication with a dosing unit for introducing the fluid formulation in the machine or preferably in a component or unit of the machine.

The tube comprises at least one first arm, at least one second arm and at least one connection part connecting the at least one first arm and the at least one second arm. The connection part is also called the sink. The at least one first arm is at least partially upwardly directed away from said connection part. Similarly, the at least one second arm is at least partially upwardly directed away from said connection part.

The fluid formulation flows from the reservoir for holding the fluid formulation to the tube of the device. Subsequently, the fluid formulation enters the tube through the inlet, flows through the at least one first arm, through the connection part, through the at least one second arm and leaves the tube through the outlet.

With "an arm that is at least partially upwardly directed away from the connection part" is meant that the main axis of the arm is upwardly directed away from an imaginary horizontal plane through the connection part and more particularly an imaginary horizontal plane through the centre of gravity of the connection part. A horizontal plane is defined as a plane that is perpendicular to the gradient of the gravity field.

In preferred embodiments, the first arm or the second is oriented perpendicular or substantially perpendicular to an imaginary horizontal plane, for example an imaginary horizontal plane through the connection part connecting the first arm and the second arm. This means that the main axis of the first arm or the main axis of the second arm is oriented perpendicular or substantially perpendicular to an imaginary horizontal plane. In a particularly preferred embodiment, both the main axis of the first arm and the main axis of the second arm are oriented perpendicular or substantially perpendicular to an imaginary horizontal plane, for example an imaginary horizontal plane through the connection part connecting the first arm and the second arm.

In other preferred embodiments, the angle between the main axis of an arm, either the first or the second arm, and the projection of this main axis of this arm on the horizontal plane through the connection part and more particularly through the centre of gravity of the connection part is ranging between 10 and 90 degrees, and more preferably between 10 and 80 degrees or between 15 and 75 degrees, for example 30 degrees, 40 degrees, 50 degrees, 60 degrees or 70 degrees.

The tube comprises one first arm, one second arm and one connection part. Alternatively, the tube may comprise more than one first arm, more than one second arm and more than one connection part.

In preferred embodiments the tube comprises a U-shaped tube, a V-shaped tube, a coil or spiral-shaped tube or a sinusoidal shaped tube.

A particular preferred tube comprises a U-shaped tube having one first arm, one second arm and a connection part connecting this first arm and this second arm. Preferably, the main axis of the first arm and the main axis of the second arm are oriented parallel or substantially parallel and preferably the main axis of the first arm and the main axis of the second arm are oriented perpendicular or substantially perpendicular to a horizontal plane.

The angle between the main axis of the first arm and the projection of the main axis of the first arm on a horizontal plane and the angle of the main axis of the second arm and the projection of the main axis of the second arm on a horizontal plane can be the same (or substantially the same) or can be different.

In case the angle between the main axis of the first arm and the projection of the main axis of the first arm on a horizontal plane and the angle of the main axis of the second arm and the projection of the main axis of the second arm on a horizontal plane are the same, the main axis of the first arm and the main axis of the second arm can be oriented in the same direction, i.e. the main axis of the first arm and the main axis of the second arm are parallel or substantially parallel. An example comprises a tube having a first arm and a second arm whereby the angle between the main axis of the first arm and the projection of the main axis of the first arm on a horizontal plane and the angle between the main axis of the second arm and the projection of the main axis of the second arm on a horizontal plane are both 45 degrees and whereby the main axis of the first arm and the main axis of the second arm are parallel or substantially parallel.

Alternatively, the main axis of the first arm and the main axis of the second arm are not oriented in the same direction, in such case the angle between the main axis of the first arm and the main axis of the second arm is preferably 90 degrees or about 90 degrees. An example comprises a tube having a first arm and a second arm whereby the angle between the main axis of the first arm and the projection of the main axis of the first arm on a horizontal plane and the angle between the main axis of the second arm and the projection of the main axis of the first arm on a horizontal plane are both 45 degrees and the angle between the main axis of the first arm and the main axis of the second arm is 90 degrees or about 90 degrees.

In case the angle between the main axis of the first arm and the projection of the main axis of the first arm on a horizontal plane and the angle between the main axis of the second arm and the projection of the main axis of the second arm on a horizontal plane are not the same, the angle between the main axis of the first arm and the main axis of the second arm preferably varies between 10 and 170 degrees, for example between 30 and 160 degrees. The angle between the main axis of the first arm and the main axis of the second arm can be less than 90 degrees, for examples less than 60 degrees or less than 30 degrees. In other embodiments the angle between the main axis of the first arm and the main axis of the second arm can be higher than 90 degrees, for example 100 degrees, 110 degrees, 120 degrees, 130 degrees or 140 degrees.

The tube and more particularly the at least one first arm, the at least one second arm and the at least one connection part can be made of any material. Preferably the tube comprises a polymer material, a metal or metal alloy or a ceramic material. A tube made of a polymer material is the most preferred. Preferred polymer materials comprise nylon, polyacrylate, polycarbonate, teflon, polyethylene, polypropylene, elastomeric and rubber material and the likes. A particular preferred polymer material comprises high density or low density polyethylene or blends thereof. The at least one first arm, the at least one second arm and the connection part may comprise the same material. Alternatively, the at least one first arm and/or the at least one second arm and/or the at least one connection part may comprise a different material.

The diameter of the tube is preferably chosen so that the flow within the tube is not influenced by capillary forces. It is preferred that the inner diameter of the tube is at least 0.3 mm and more preferably in the range 4 mm to 20 mm. The diameter of the at least one first arm, the at least one second arm and the connection part can be the same. Alternatively, the diameter of the first arm, the diameter of the second arm and the diameter of the connection part are chosen independently from each other.

The at least one sensor is positioned in the at least one connection part of the tube, i.e. between the at least one first arm and the at least one second arm. At this position the resistance to the liquid flow is low and the hydrostatic pressure felt by the at least one sensor is higher than at other positions of tube. Positioning the at least one sensor in the at least one connection part of tube ensures that the at least one sensor is in constant contact with the fluid formulation and that even during non-use of the machine or process, the residual fluid formulation does not dry out on the at least one sensor thereby ensuring that the sensitivity of the at least one sensor is not reduced. In case the tube comprises more than one connection part, the at least one sensor can be placed in one of the connection parts or alternatively a sensor can be placed in more than one connection parts, for example one or more sensors are placed in all of the connection parts of the tube.

Sensor;

As sensor any type of sensors known in the art can be considered. Examples of sensors comprise optical sensors, electrochemical sensors, electrical sensors, mass sensitive sensors, magnetic sensors, thermometric sensors and ionic sensors.

As optical sensors absorbance sensors, reflectance sensors, luminescence sensors, refractive index sensors, optothermal sensors or scattering sensors can be considered. Examples of electrochemical sensors comprise voltammetric sensors, potentiometric sensors, amperometric sensors and CHEMFET (chemical sensitive field effect transistors) sensors.

Examples of electrical sensors comprise electrolytic conductivity sensors, metal oxide semiconductor sensors, electrical conductivity sensors, electrical permittivity sensors and organic semiconductor sensors.

Examples of mass sensitive sensors comprise piezo electric sensors and surface acoustic sensors.

In a preferred embodiment the at least one sensor comprises an electrochemical sensor that is capable of detecting a marker present in the fluid formulation, such as molecules like gallic acid, ferrous sulphate or potassium iodide present as marker in the fluid formulation. A particularly preferred sensor comprises an electrochemical sensor capable of detecting potassium iodide as marker present in the fluid formulation.

In a particular embodiment the electrochemical sensor comprises at least a pair of electrodes. It is preferred that the material of the electrodes is chosen from conducting materials like metals, carbon, dimensionally stable anodes and mixed metal oxide coated anodes. The electrodes are for example made of carbon, platinum, palladium, titanium, gold, silver and more preferably platinised titanium. Electrodes that are chemically or enzymatically modified to increase specificity to the marker molecule can also be used. The machine comprising the device according to the present invention comprises one sensor. Alternatively, it comprises more than one sensor for example two or three sensors.

Fluid formulation:

As fluid formulation any flowable substance can be considered. The fluid formulation to be used in the machine is preferably in the form of a fluid, paste or a gel, i.e., a composition that can flow. The fluid formulation fluid is preferably selected from a detergent composition suitable for cleaning laundry, for cleaning hard surfaces or suitable for personal care/hygiene.

A preferred fluid formulation comprises a cleaning composition, for example any suitable detergent composition available commercially or any detergent composition formulated for a specific purpose. The composition preferably comprises an active detergent in a concentration between 5 and 50% by weight of the composition. The active detergent comprises preferably an anionic, non-ionic, cationic or zwitterionic surfactant or a mixture thereof. Preferably other agents such as builders, abrasives, perfumes, colouring agents, polymers, hydrotropes, fluorescers, enzymes and/or bleaches are added to the composition, for example in a concentration upto 10% by weight of the composition.

The fluid formulation comprises at least one marker. The at least one marker can for example be detected by a sensor, for example by an optical sensor, by an electrochemical sensor, by an optothermal sensor, by a light scattering sensor, by an electrical sensor, by a mass sensitive sensor, by a magnetic sensor, by a thermometric sensor, by a ionic sensor. The at least one marker may comprise an organic molecule like tryptophan, gallic acid or may comprise an inorganic molecule like ferrous sulphate or potassium iodide. A preferred marker comprises potassium iodide.

Machine:

The machine can be an electrical or non-electrical appliance. Preferred machines comprise appliances used for cleaning or for personal care applications. Preferred processes comprises cleaning processes.

It is preferred that the device of the present invention is fitted or incorporated partially or integrally into the machine.

Preferably the machine comprises a central processing unit. It is preferred that when the consumer switches on the machine to initiate its operation, the central processing unit of the machine preferably gives a signal to the sensor to perform the test for the presence or absence of marker molecule in the device setup. If the fluid formulation contains the marker molecule, the sensor detects the marker molecule and the controller gives a signal to allow the initiation of the operation of the machine or the process in said machine. Preferably the controller gives a signal to the central processing unit and the central processing unit initiates the operation of the machine or the process.

In case the fluid formulation does not contain the marker molecule, the sensor does not detect the marker molecule and the controller gives a signal to stop the operation of the machine or of the process. Preferably the controller gives a signal to the central processing unit and the central processing unit stops the operation of the machine or of the process.

Controller:

The controller is coupled to the at least one sensor and compares the signal caused by the fluid formulation and detected by the at least one sensor with a threshold value or with a predetermined range of values. The threshold value or the predetermined range of values corresponds with the value or range of values the sensor detects when the fluid formulation meets the control requirements and corresponds for example with the value or range of values caused by the marker present in the fluid formulation.

If the signal caused by the fluid formulation and detected by the at least one sensor does not correspond with the threshold value or is not within the predetermined range of values, the sensor gives a signal to the controller gives a signal to the machine to stop the machine or the process, or to stop a component or unit of the machine or a sub-process of the process.

The controller is preferably an electronically operated controller.

The constitution and operation of the recorder depends on the type of the sensor used. For example, if the type of sensor used in the device is an optical sensor, then the controller provides an input voltage to the optical source and a bias voltage (if required) to the optical sensor. In the case an electrochemical sensor is used, the controller preferably comprises a source of voltage pulse provider and a current measuring system. The voltage pulse provider preferably provides a pulse of amplitude between 0.01V and 3V between the electrodes of the sensor and more preferably a pulse of amplitude between 0.35 V and 0.95V.

Preferably, an electronic central processing unit of the machine controls the operation of the controller. In cases whereby the machine does not have a central processing unit on its own, the controller preferably comprises a central processing unit.

Preferably the controller gives a signal to the central processing unit and the central processing unit gives a signal to the machine or to a component or unit of the machine or to a subprocess to start, to continue or to stop the machine or process. In this way, the controller is able to identify whether the formulation added to the machine is appropriate for the process involved in the machine.

In a preferred operation of the machine and device for detecting a marker, a cleaning process will be initiated when any formulation with or without the required marker molecule is present. However, a sub-process available in the cleaning machine will be initiated only if the device for detecting the marker, detects the marker molecule in the fluid formulation. In case, the sensor does not detect the marker molecule, the process will be ended only with the cleaning step without initiating the sub-process.

According to a second aspect the present invention relates to a method to control a machine (10) or a process in said machine (10) as defined in any one of claims 1 to 11, said method comprises the steps of introducing said fluid formulation from said reservoir (5) for holding said fluid formulation in said machine (10) comprising said device (12) said at least one sensor (4) controlling the presence or absence of said at least one marker in the fluid formulation by detecting a signal caused by said at least one marker in the fluid formulation comparing with said controller (7) the signal caused by the marker in said fluid formulation with a predetermined range of values, whereby if said signal is not within a predetermined range of values said controller (7) gives a signal to the machine (10) to stop the operation of said machine (10) or said process in said machine (10).

The method concerns a method whereby the quality of the fluid formulation is controlled by detecting the presence of a marker present in the fluid formulation that is to be introduced in the machine.

If the marker is not present, the sensor gives a signal to the controller to stop the machine or process or to stop a component or unit of the machine or sub-process of the process. If the marker is present in the fluid formulation, the sensor gives a signal to the controller to start or continue the machine or process.

### Brief Description of the Drawings:

The invention will now be described into more detail with reference to the accompanying drawings whereby

- Figure 1 shows an illustration of a first embodiment of a device according to the present invention;
- Figure 2 shows an illustration of a second embodiment of a device according to the present invention.

### Detailed description of the invention

The present invention will be described with respect to particular embodiments and with reference to certain drawings but the invention is not limited thereto but only by the claims. The drawings described are only schematic and non-limiting. In the drawings, the size of some of the elements may be exaggerated and not drawn on scale for illustrative purposes. The dimensions and the relative dimensions do not correspond to actual reductions to practice of the invention.

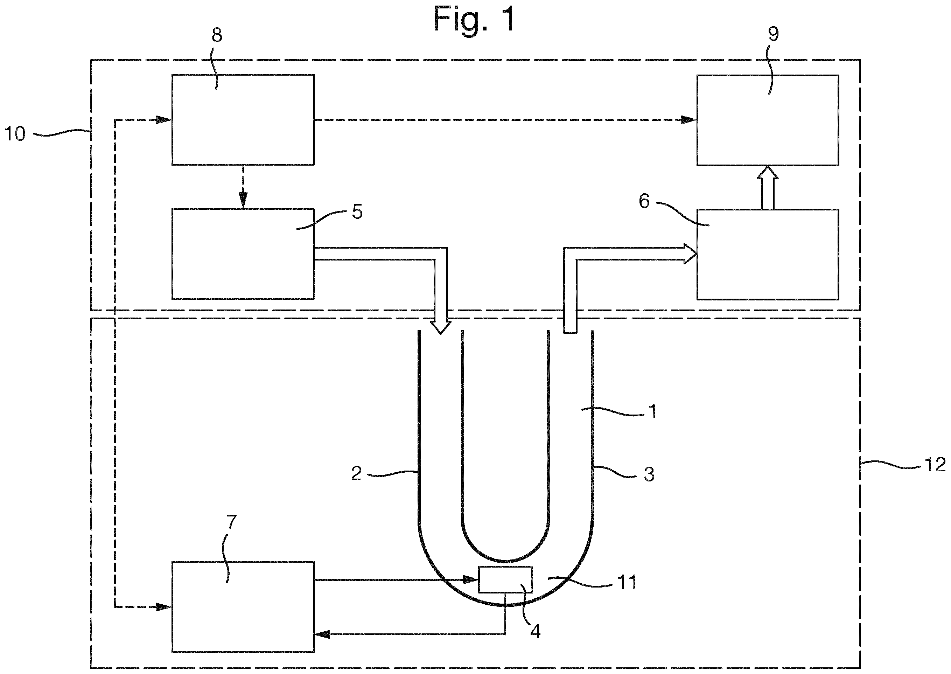

Figure 1 shows a machine comprising a device 12 for controlling the machine 10 or a component or unit of such machine 10 as for example a process drum 9 by controlling the quality of a fluid formulation to be introduced into machine 10 or component or unit of such machine 10 as for example a process drum 9. Figure 1 shows more particularly a device 12 for detecting a marker present in a fluid formulation to be introduced to a machine 10 or to a unit of machine 10 as for example a machine process drum 9. The device 12 comprises a tube as for example a U-shaped tube, a sensor 4 for detecting a signal caused by the fluid formulation and a controller 7. The U-shaped tube 1 shown in Figure 1 comprises a first upwardly directed arm 2, a second upwardly directed arm 3 and a connection part 11 connecting the first upwardly directed arm 2 and the second upwardly directed arm 3. The first upwardly directed arm 2 and the second upwardly directed arm are for example both oriented perpendicular to a horizontal plane. For a person skilled in the art, it is clear that other configurations of tube 1 can be considered. The first upwardly directed arm 2 is in fluid communication with a reservoir 5 for holding the fluid formulation, the second upwardly directed arm 3 is in fluid communication with the dosing unit 6 for dosing the fluid formulation to the machine process drum 9. The sensor 4 is positioned in the connection part 11 of the U-shaped tube 1.

The controller 7 comprises preferably an electronic module. The controller 7 comprises for example a recorder.

Table 1 mentions a number of possible marker molecules. For each marker molecule a suitable sensor is mentioned.

Table 1 : examples of markers with for each marker a suitable sensor

| Marker | Sensor |
|---|---|
| Zinc salicylate | Optical absorbance sensor (absorbance at 296 nm) |
| Curcumin | Fluorescence sensor |
| Sodium chloride | Electrical conductivity sensor |
| Gallic acid | Amperometric sensor |
| Potassium iodide | Amperometric sensor |

When the consumer switches on the machine 10 to initiate the operation of the machine 10, the central processing unit 8 of the machine 10 sends a signal to the sensor 4 to perform the test for the presence or absence of marker molecule in the fluid formulation. If the fluid formulation contains the marker molecule, the sensor 4 detects the marker molecule and the controller 7 (for example a recorder) sends a signal to the central processing unit 8 to allow the initiation of the process which comprises for example the dosing of the fluid formulation through dosing unit 6 in unit 9, comprising for example a machine process drum.

In case, if the formulation does not contain the marker molecule, the sensor 4 does not detect the marker molecule and the controller 7 (for example a recorder) will send a signal to the central processing unit 8 to disallow the initiation of the process in unit 9 of machine 10.

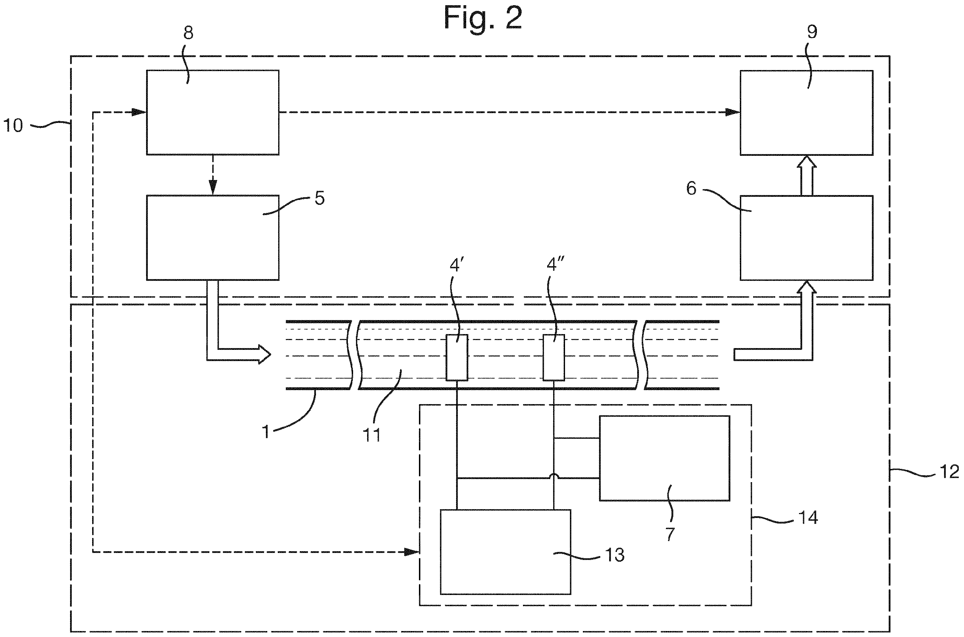

Figure 2 shows another device 12 for controlling a fluid formulation to be introduced to a machine 10 and more particularly to detect a marker present in a fluid formulation to be introduced to machine 10. The device 12 comprise a tube 1 and a sensor 4 positioned in the tube 1. The tube 1 comprises a first upwardly directed arm (not shown), a second upwardly directed arm (not shown) and a connection part 11 connecting the first upwardly directed arm and the second upwardly directed arm.

The sensor 4 is positioned in the connection part 11 of tube 1. The sensor 4 comprises an electrochemical sensor comprising two electrodes, a first electrode 4' and a second electrode 4". The first electrode 4' and the second electrode 4" are connected to a voltage pulse provider 13 and a controller 7 (for example a recorder), both of which form the electronic module 14. The electrodes 4' and 4" are positioned inside the tube such that the electrodes 4' and 4" are in complete contact with the fluid formulation. When the central processing unit 8 of the machine 10 initiates the supply of the fluid formulation for initiating the process in the machine 10, it will send a signal to the voltage pulse provider 13. In turn, the voltage pulse provider 13 generates a pulsed voltage input and sends it to the electrodes 4' and 4". The voltage pulse provider 13 is programmed to generate the pulse such that the amplitude of the pulse is equal to the redox potential of the marker molecule present in the fluid formulation. The current response between the electrodes is recorded by the controller 7 (for example recorder). The controller 7 (for example recorder) sends the measured value back to the central processing unit 8 which analyses the data and makes a decision whether the fluid formulation en-route to the dosing unit 6 contains the marker molecule or not.

As it is essential for the present invention that the machine comprising the device according to the present invention ensures appropriate functioning of the device when different fluid formulations are used, for example when different fluid formulations are consecutively used, the efficiency of a device according to the present invention is evaluated when a prefilled fluid formulation present in the U-shaped tube is replaced with a new fluid formulation.

A machine comprising a device according to the present invention is in particular evaluated when a prefilled fluid formulation present in the U-shaped tube is replaced with a new fluid formulation having a density different than the density of the prefilled fluid formulation.

The device set-up to evaluate the efficiency comprises a tube having a first upwardly directed arm, a second arm upwardly directed arm and a connection part connecting the first and the second arm. The first arm and the second arm are oriented perpendicular to a horizontal plane. The tube forms a U-shaped tube. The length of the first and the second arm of the U-shaped tube is for example 8 cm, the internal diameter of the U-shaped tube is for example 1 cm. The sensor used for detecting the marker molecule comprises for example an electrochemical sensor comprising for example two electrodes made of platinised titanium. The two electrodes are positioned inside the connection part of the U-shaped tube of the device as shown in figure 2. A BAS 100W electrochemical workstation was used as the sensor. The first electrode of the sensor was connected to the terminal corresponding to the working electrode of the electrochemical workstation. The auxiliary and reference electrode terminals of the workstation were shorted and connected to the second electrode.

The evaluation comprises the following steps:

    i. The determination of the density of the different fluid formulations;

    ii. Evaluation of summation of current values (Is) in mA of the different fluid formulations;

    iii. Evaluation of performance of the device during sequential use of different formulations having different densities

i. Determination of the Density of the individual formulations:

Four commercial detergent formulations referred to as Examples 1 to 4 and a marker detergent formulation containing a marker molecule were used in the evaluation. The marker molecule comprises for example potassium iodide. The density of the commercial detergent formulations of Examples 1 to 4 was measured by the following protocol: The weight of a dry 10 ml standard volumetric flask was determined. The weight of the dry 10 ml standard volumetric flask is referred to as the initial weight, W1. The fluid formulation of the four commercial detergent and of the marker detergent formulation was poured inside a dry 10 ml standard volumetric flask. It was ensured that the lower meniscus of the formulation is exactly tangential to the mark of '10ml' volume. The final weight (W2) of the flasks filled with the formulations was noted down.

The density of the formulation was calculated using the formula as follows :

$$Density = ((W2-W1)/V)$$

With

W1 = Initial Weight of the flask in kg
W2 = Final Weight of the flask in kg
V = 0.00001m$^3$ (equal to 10 ml)

The density of the four commercial detergent formulations and of the marker detergent formulation is listed in Table 2.

The marker detergent formulation was prepared by taking 41.67 g linear alkyl benzene sulphonic acid (LAS acid) obtained from Advanced Surfactants, India and it was mixed with 348 g deionized water under stirring and was neutralized with 10% sodium hydroxide (NaOH) solution till a pH 8 was attained. After neutralization, 10 g of monopropylene glycol and 57.14 g of sodium lauryl ether sulphate (SLES) obtained from Merck, were added under mixing. 0.1 g of potassium iodide procured from SD Fine Chemicals was added to the formulation.

Table 2 : Density of the marker detergent formulation and of the four commercial detergent formulations

| Name of the Formulation | Density (g/cc) |
|---|---|
| Marker formulation | 1.05 |
| Example 1 | 1.03 |
| Example 2 | 1.06 |
| Example 3 | 1.04 |
| Example 4 | 1.02 |

ii. Evaluation of summation of current values (IS) in mA of the different fluid formulations

The evaluation was performed by pre-filling the tube of the device with 12 ml of one of the detergent formulations of Examples 1 to 4 and the marker detergent formulation individually such that the U-tube was completely filled. The summation of current values (Is) in mA for each fluid was measured using a single pulse chronoamperometric technique to detect the potassium iodide (KI) in the formulation. A pulse of amplitude 0.6V, corresponding to the redox potential of potassium iodide (KI) was applied across the electrodes for 3 seconds. The current between the two electrodes was measured at every 5ms interval and the summation of current values (Is) from 100 mS to 3 seconds was obtained. The Is values of all the formulations under evaluation are presented in Table 3.

Table 3: The summation of current values (Is) in mA for each fluid tested individually

| Name of formulation | Is value (mA) |
|---|---|
| Marker formulation | 2095 $\pm$ 200mA |
| Example 1 | 776 $\pm$ 200mA |
| Example 2 | 1163 $\pm$ 200mA |
| Example 3 | 651 $\pm$ 200mA |
| Example 4 | 822 $\pm$ 200mA |

From Table 3, it can be clearly observed that the marker detergent formulation exhibits a Is value higher than the other fluids of Examples 1-4 not containing the marker molecule, signifying the contribution of the KI oxidation phenomenon to the overall current response of marker fluid to the applied potential between electrodes.

i. Evaluation of performance of the device during sequential use of different formulations having different densities

The evaluation was performed by pre-filling the tube of the device with 12 ml of one of the detergent formulations of Examples 1 to 4 in such a way that the U-shaped tube was completely filled. Subsequently 40 ml of the marker detergent formulation was added. This was repeated for each of the detergent formulations of Examples 1 to 4.

In another set of experiments, the above order of addition of the detergent formulations was reversed, i.e. firstly the U-shaped tube was filled with the marker detergent formulation and subsequently the other detergent formulations of Examples 1 to 4 were added. After each instance of filling up the detergent formulation of Examples 1 to 4 inside the device, the formulation was tested for the presence or absence of the marker molecule. The data showing the efficiency of evaluation of the marker molecule using the device during sequential use of different formulations of varying densities are presented in Table 4.

Table 4: current values (Is) in mA measured for the second formulation

| Prefilled Formulation inside U-tube | Second Formulation | Is value (mA) | Result |
|---|---|---|---|
| Example 1 | Marker Formulation | 2123 | Marker formulation had replaced prefilled formulation of Examples 1-4 completely |
| Example 2 | | 2101 | |
| Example 3 | | 2324 | |
| Example 4 | | 2127 | |
| Marker Formulation | Example 1 | 826 | Formulation of Examples 1-4 had replaced the prefilled marker formulation completely |
| | Example 2 | 1302 | |
| | Example 3 | 661 | |
| | Example 4 | 1011 | |

It can be clearly seen from the table 4 that the Is values measured after the second formulation is filled inside the tube, is equal to the Is values corresponding to the second formulation only. This signifies that the device ensures the faithful replacement of a prefilled formulation of a particular density with a new formulation of different density.

**Claims**

1. A machine (10) comprising a device (12) for controlling the machine (10) or a process in said machine (10) by detecting the presence or absence of at least one marker in a fluid formulation to be introduced in said machine, said device (12) comprising:

   - a tube (1), said tube (1) comprising an inlet and an outlet, said inlet being in fluid communication with a reservoir (5) of said machine (10) for holding said fluid formulation, said outlet being in fluid communication with a dosing unit (6) of said machine (10) for introducing said fluid formulation in said machine (10), said tube (1) comprising at least one first arm (2), at least one second arm (3) and at least one connection part (11), said connection part connecting said at least one first arm (2) and said at least one second arm (3), whereby said at least one first arm (2) is at least partially upwardly directed away from said connection part (11) and said at least one second arm (3) is at least partially upwardly directed away from said connection part (11);
   - at least one sensor (4) for detecting the presence of said marker in said fluid formulation by detecting a signal caused by said marker in said fluid formulation, said at least one sensor (4) being positioned in said connection part (11) connecting said first (2) and second arm (3);
   - a controller (7) coupled to said at least one sensor (4) for comparing said signal caused by said marker in said fluid formulation with a predetermined range of values; whereby if said signal caused by said marker in said fluid formulation is not within said predetermined range of values said controller (7) gives a signal to said machine(10) to stop the operation of the machine (10) or said process in said machine (10).

**2.** A machine comprising a device according to claim 1, whereby said at least one first arm (2) and/or said at least one second arm (3) of said tube (1) are oriented perpendicular or substantially perpendicular towards an imaginary horizontal plane.

**3.** A machine comprising a device (12) according to claim 1 or claim 2, whereby said at least one first arm (2) has a first main axis and said at least one second arm (3) has a second main axis, whereby the angle between the first main axis and the projection of said first main axis on a horizontal plane is ranging between 10 and 90 degrees and/or whereby the angle between the second main axis and the projection of said second main axis on a horizontal plane is ranging between 10 and 90 degrees.

**4.** A machine comprising device (12) according to claim 3, whereby the angle between said first main axis of said at least one first arm (2) and said second main axis of said at least one second arm (3) ranges between 10 and 170 degrees.

**5.** A machine comprising a device (12) according to any one of the preceding claims 1 to 4, whereby said tube (1) comprises a U-shaped tube, a V-shaped tube, a coil or spiral-shaped tube or a sinusoidal shaped tube.

**6.** A machine comprising a device (12) according to any one of the preceding claims 1 to 5, whereby said tube (1) has an inner diameter of at least 0.3 mm.

**7.** A machine comprising a device (12) according to any one of the preceding claims 1 to 6, whereby said at least one sensor (4) is a sensor selected from the group consisting of optical sensors, electrochemical sensors, electrical sensors, mass sensitive sensors magnetic sensors, thermometric sensors or ionic sensors.

**8.** A machine comprising a device (12) according to claim 7, whereby said at least one sensor (4) is an electrochemical sensor.

**9.** A machine comprising a device (12) according to claims 7 or 8, whereby said at least one sensor (4) comprises a first electrode and a second electrode.

**10.** A machine comprising a device (12) according to any one of the preceding claims 7 to 9, whereby said controller (7) comprises a voltage pulse provider and a current measuring system.

**11.** A machine comprising a device (12) according to any one of the preceding claims 1 to 10, whereby said at least one controller (7) determines the oxidation current of said marker in said fluid formulation.

**12.** A method to control a machine (10) or a process in said machine (10) as defined in any one of claims 1 to 11, said method comprises the steps of introducing said fluid formulation from said reservoir (5) for holding said fluid formulation in said machine (10) comprising said device (12) said at least one sensor (4) controlling the presence or absence of said at least one marker in the fluid formulation by detecting a signal caused by said at least one marker in the fluid formulation comparing with said controller (7) the signal caused by the marker in said fluid formulation with a predetermined range of values, whereby if said signal is not within a predetermined range of values said controller (7) gives a signal to the machine (10) to stop the operation of said machine (10) or said process in said machine (10).

**Patentansprüche**

**1.** Maschine (10), umfassend eine Vorrichtung (12) zum Steuern der Maschine (10) oder eines Prozesses in der Maschine (10) durch Erfassen der Anwesenheit oder Abwesenheit mindestens eines Markers in einer in die Maschine einzuleitende Fluidformulierung, wobei die Vorrichtung (12) umfasst:

- ein Rohr (1), wobei das Rohr (1) einen Einlass und einen Auslass aufweist, wobei der Einlass in Fluidverbindung mit einem Reservoir (5) der Maschine (10) zum Aufnehmen der Fluidformulierung ist, wobei der Auslass in Fluidverbindung mit einer Dosiereinheit (6) der Maschine (10) zum Einleiten der Fluidformulierung in die Maschine (10) ist, wobei das Rohr (1) mindestens einen ersten Arm (2), mindestens einen zweiten Arm (3) und mindestens ein Verbindungsteil (11) aufweist, wobei das Verbindungsteil den mindestens einen ersten Arm (2) und den mindestens einen zweiten Arm (3) verbindet, wobei der mindestens eine erste Arm (2) mindestens teilweise nach oben weg von dem Verbindungsteil (11) gerichtet ist und der mindestens eine zweite Arm (3) zumindest teilweise nach oben weg von dem Verbindungsteil (11) gerichtet ist;

- mindestens einen Sensor (4) zum Erfassen der Anwesenheit des Markers in der Fluidformulierung durch Erfassen eines Signals, das durch den Marker in der Fluidformulierung verursacht wird, wobei der mindestens eine Sensor (4) in dem Verbindungsteil (11) positioniert ist, das den ersten (2) und den zweiten Arm (3) verbindet;

- eine Steuerung (7), die mit dem mindestens einen Sensor (4) gekoppelt ist, um das Signal, das durch den Marker in der Fluidformulierung verursacht wird, mit einem vorbestimmten Bereich von Werten zu vergleichen; wobei, wenn das durch den Marker in der Fluidformulierung verursachte Signal nicht innerhalb des vorbestimmten Bereichs von Werten liegt, die Steuerung (7) ein Signal an die Maschine (10) gibt, um den Betrieb der Maschine (10) oder den Prozess in der Maschine (10) zu stoppen.

2. Maschine, umfassend eine Vorrichtung nach Anspruch 1, wobei der mindestens eine erste Arm (2) und/oder der mindestens eine zweite Arm (3) des Rohres (1) senkrecht oder im Wesentlichen senkrecht zu einer gedachten horizontalen Ebene ausgerichtet sind.

3. Maschine, umfassend eine Vorrichtung (12) nach Anspruch 1 oder Anspruch 2, wobei der mindestens eine erste Arm (2) eine erste Hauptachse aufweist und der mindestens eine zweite Arm (3) eine zweite Hauptachse aufweist, wobei der Winkel zwischen der ersten Hauptachse und der Projektion der ersten Hauptachse auf eine horizontale Ebene im Bereich zwischen 10 und 90 Grad liegt und/oder wobei der Winkel zwischen der zweiten Hauptachse und der Projektion der zweiten Hauptachse auf eine horizontale Ebene im Bereich zwischen 10 und 90 Grad liegt.

4. Maschine, umfassend eine Vorrichtung (12) nach Anspruch 3, wobei der Winkel zwischen der ersten Hauptachse des mindestens einen ersten Arms (2) und der zweiten Hauptachse des mindestens einen zweiten Arms (3) im Bereich zwischen 10 und 170 Grad liegt.

5. Maschine, umfassend eine Vorrichtung (12) nach irendeinem der vorhergehenden Ansprüche 1 bis 4, wobei das Rohr (1) ein U-förmiges Rohr, ein V-förmiges Rohr, ein spulen- oder spiralförmiges Rohr oder ein sinusförmiges Rohr umfasst.

6. Maschine, umfassend eine Vorrichtung (12) nach irgendeinem der vorhergehenden Ansprüche 1 bis 5, wobei das Rohr (1) einen Innendurchmesser von mindestens 0,3 mm aufweist.

7. Maschine, umfassend eine Vorrichtung (12) nach irgendeinem der vorhergehenden Ansprüche 1 bis 6, wobei der mindestens eine Sensor (4) ein Sensor ist, der ausgewählt ist aus der Gruppe bestehend aus optischen Sensoren, elektrochemischen Sensoren, elektrischen Sensoren, massesensitiven Sensoren, magnetischen Sensoren, thermometrische Sensoren oder ionische Sensoren.

8. Maschine, umfassend eine Vorrichtung (12) nach Anspruch 7, wobei der mindestens eine Sensor (4) ein elektrochemischer Sensor ist.

9. Maschine, umfassend eine Vorrichtung (12) nach den Ansprüchen 7 oder 8, wobei der mindestens eine Sensor (4) eine erste Elektrode und eine zweite Elektrode umfasst.

10. Maschine, umfassend eine Vorrichtung (12) nach irgendeinem der vorhergehenden Ansprüche 7 bis 9, wobei die Steuerung (7) einen Spannungsimpulsgeber und ein Strommesssystem umfasst.

11. Maschine, umfassend eine Vorrichtung (12) nach irgendeinem der vorhergehenden Ansprüche 1 bis 10, wobei die mindestens eine Steuerung (7) den Oxidationsstrom des Markers in der Fluidformulierung bestimmt.

12. Verfahren zum Steuern einer Maschine (10) oder eines Prozesses in der Maschine (10) wie in irgendeinem der Ansprüche 1 bis 11 definiert, wobei das Verfahren umfasst die Schritte des Einleitens der Fluidformulierung aus dem Reservoir (5) zum Aufnehmen der Fluidformulierung in die Maschine (10), umfassend die Vorrichtung (12), wobei der mindestens eine Sensor (4) die Abwesenheit oder Anwesenheit des mindestens einen Markers in der Fluidformulierung steuert, indem ein Signal, das durch den mindestens einen Marker in der Fluidformulierung verursacht wird, erfasst wird, das Signal, das durch den Marker in der Fluidformulierung verursacht wird, durch die Steuerung (7) mit einem vorbestimmten Bereich von Werten verglichen wird, wobei, wenn das Signal nicht innerhalb eines vorbestimmten Bereichs von Werten liegt, die Steuerung (7) ein Signal an die Maschine (10) gibt, um den Betrieb der Maschine (10) oder den Prozess in der Maschine (10) zu stoppen.

**Revendications**

1. Machine (10) comprenant un dispositif (12) pour contrôler la machine (10) ou un procédé dans ladite machine (10) en détectant la présence ou l'absence d'au moins un marqueur dans une formulation fluide à introduire dans ladite machine, ledit dispositif (12) comprenant :

   - un tube (1), ledit tube (1) comprenant une entrée et une sortie, ladite entrée étant en communication fluide avec un réservoir (5) de ladite machine (10) pour contenir ladite formulation fluide, ladite sortie étant en communication fluide avec une unité de dosage (6) de ladite machine (10) pour introduire ladite formulation fluide dans ladite machine (10), ledit tube (1) comprenant au moins un premier bras (2), au moins un second bras (3) et au moins une partie de connexion (11), ladite partie de connexion connectant ledit au moins un premier bras (2) et ledit au moins un second bras (3), dans laquelle ledit au moins un premier bras (2) est au moins partiellement dirigé vers le haut en s'éloignant de ladite partie de connexion (11) et ledit au moins un second bras (3) est au moins partiellement dirigé vers le haut en s'éloignant de ladite partie de connexion (11) ;
   - au moins un détecteur (4) pour détecter la présence dudit marqueur dans ladite formulation fluide en détectant un signal occasionné par ledit marqueur dans ladite formulation fluide, ledit au moins un détecteur (4) étant positionné dans ladite partie de connexion (11) connectant lesdits premier (2) et second bras (3) ;
   - un dispositif de contrôle (7) couplé audit au moins un détecteur (4) pour comparer ledit signal occasionné par ledit marqueur dans ladite formulation fluide avec un intervalle prédéterminé de valeurs ;
   dans laquelle si ledit signal occasionné par ledit marqueur dans ladite formulation fluide ne se trouve pas à l'intérieur dudit intervalle prédéterminé de valeurs ledit dispositif de contrôle (7) fournit un signal à ladite machine (10) pour stopper l'opération de la machine (10) ou ledit procédé dans ladite machine (10).

2. Machine comprenant un dispositif selon la revendication 1, dans laquelle ledit au moins un premier bras (2) et/ou ledit au moins un second bras (3) dudit tube (1) sont orientés perpendiculairement ou substantiellement perpendiculairement vers un plan horizontal imaginaire.

3. Machine comprenant un dispositif (12) selon la revendication 1 ou revendication 2, dans laquelle ledit au moins un premier bras (2) présente un premier axe principal et ledit au moins un second bras (3) présente un second axe principal, dans laquelle l'angle entre le premier axe principal et la projection dudit premier axe principal sur un plan horizontal est de 10 à 90 degrés et/ou dans laquelle l'angle entre le second axe principal et la projection dudit second axe principal sur un plan horizontal est de 10 à 90 degrés.

4. Machine comprenant un dispositif (12) selon la revendication 3, dans laquelle l'angle entre ledit premier axe principal dudit au moins un premier bras (2) et ledit second axe principal dudit au moins un second bras (3) est de 10 à 170 degrés.

5. Machine comprenant un dispositif (12) selon l'une quelconque des revendications 1 à 4 précédentes, dans laquelle ledit tube (1) comprend un tube en forme de U, un tube en forme de V, un tube en forme de spirale ou de serpentin ou un tube de forme sinusoïdale.

6. Machine comprenant un dispositif (12) selon l'une quelconque des revendications 1 à 5 précédentes, dans laquelle ledit tube (1) présente un diamètre interne d'au moins 0,3 mm.

7. Machine comprenant un dispositif (12) selon l'une quelconque des revendications 1 à 6 précédentes, dans laquelle ledit au moins un détecteur (4) est un détecteur choisi dans le groupe consistant en détecteurs optiques, détecteurs électrochimiques, détecteurs électriques, détecteurs sensibles à la masse, détecteurs magnétiques, détecteurs thermométriques ou détecteurs ioniques.

8. Machine comprenant un dispositif (12) selon la revendication 7, dans laquelle ledit au moins un détecteur (4) est un détecteur électrochimique.

9. Machine comprenant un dispositif (12) selon la revendication 7 ou 8, dans laquelle ledit au moins un détecteur (4) comprend une première électrode et une seconde électrode.

10. Machine comprenant un dispositif (12) selon l'une quelconque des revendications 7 à 9, dans laquelle ledit dispositif de contrôle (7) comprend un fournisseur d'impulsion de tension et un système de mesure de courant.

11. Machine comprenant un dispositif (12) selon l'une quelconque des revendications 1 à 10 précédentes, dans laquelle ledit au moins un dispositif de contrôle (7) détermine le courant d'oxydation dudit marqueur dans ladite formulation fluide.

12. Procédé pour contrôler une machine (10) ou un procédé dans ladite machine (10) comme défini dans l'une quelconque des revendications 1 à 11, ledit procédé comprend les étapes d'introduction de ladite formulation fluide à partir dudit réservoir (5) pour contenir ladite formulation fluide dans ladite machine (10) comprenant ledit dispositif (12), ledit au moins un détecteur (4) contrôlant la présence ou l'absence dudit au moins un marqueur dans la formulation fluide par détection d'un signal occasionné par ledit au moins un marqueur dans la formulation fluide en comparant avec ledit dispositif de contrôle (7) le signal occasionné par le marqueur dans ladite formulation fluide avec un intervalle prédéterminé de valeurs, dans lequel si ledit signal ne se trouve pas dans un intervalle prédéterminé de valeurs ledit dispositif de contrôle (7) fournit un signal à la machine (10) pour stopper l'opération de ladite machine (10) ou dudit procédé dans ladite machine (10).

Fig. 1

Fig. 2

**EP 3 469 373 B1**

REFERENCES CITED IN THE DESCRIPTION

**Patent documents cited in the description**

- US 20070295665 A1
- US 20130048024 A1
- DE 102005046858 B3